# EUROPEAN PATENT SPECIFICATION

(11) **EP 1 458 472 B1**
(45) Date of publication and mention of the grant of the patent: **30.07.2008**
(21) Application number: 02790961.3
(22) Date of filing: 14.11.2002
(51) Int. Cl.: B01J 13/02

(54) **METHOD OF PREPARING FUNCTIONAL MICROCAPSULE INCORPORATING SILVER NANOPARTICLES**
VERFAHREN ZUR HERSTELLUNG VON FUNKTIONELLEN MIKROKAPSELN MIT SILBERNANOTEILCHEN
PROCEDE DE PREPARATION D'UNE MICROCAPSULE FONCTIONNELLE COMPRENANT DES NANOPARTICULES D'ARGENT

(30) Priority: 27.12.2001 KR 2001085893
(43) Date of publication of application: 22.09.2004
(73) Proprietor: Polychrom Co. Ltd., 425-866 Ansan-si, Gyeonggi-do (KR)
(72) Inventor: Yang, Si-Young, 429-450 Siheung-si, Gyeonggi-do (KR)
(74) Representative: Preissner, Nicolaus
(86) International application number: PCT/KR2002/002124
(87) International publication number: WO 2003/055588

(56) References cited:
- EP-A- 0 972 563
- JP-A- 5 068 873
- US-A- 4 902 600
- US-A- 4 963 461
- US-A- 5 503 781
- US-A- 5 866 202

## Description

### 1. TECHNICAL FIELD

The present invention, in general, relates to a method of preparing a silver nanoparticle-containing functional microcapsule exhibiting the intrinsic functions of silver. More particularly, the present invention relates to a method of preparing a silver nanoparticle-containing functional microcapsule, comprising impregnating silver particles in a microfine nanoparticle form into the outer shell of a functional microcapsule, thereby additionally providing the functional microcapsule with the intrinsic antimicrobial and therapeutic functions of silver.

### 2. BACKGROUND ART

With the high interest in functional substances, recently, efforts to apply microcapsules to diverse fields have been attempted. In addition, interest in and importance of the nanoparticle field have increased.

Silver (Ag), which is one of the known functional substances, has been clinically used as a natural antibiotic for a long period of time, and has been demonstrated to have comparable effects to the chemically-synthesized antibiotics, with no known side effects.

Silver has been well known to be toxic to microorganisms. Actually, silver was medically proved to have the strongest antimicrobial activity among antibiotics known until now.

On the other hand, functional microcapsules have been recently applied to a broad variety of fields. Various functional microcapsules have been developed, ranging from microcapsules of a relatively simple structure to high-functional microcapsules, thereby expanding their applications to various and practical fields.

Examples of the functional microcapsules include perfume microcapsules, thermochromic microcapsules, photochromic microcapsules, insecticidal agent-containing microcapsules, and pharmaceutical preparation-containing microcapsules.

However, the conventional functional microcapsules generally display only functions established upon preparation. For example, the recently widely used perfume microcapsules release only perfume impregnated during their preparation.

Besides, in case of the recently spotlighted nanoparticles, already applied to practical living, various and broad studies are in progress worldwide, and they are predicted to be applicable to a broad range of fields.

Through practical applications of nanoparticles in a variety of fields, their diverse and novel functions have been reported continuously, in addition to the known general function limited to metals.

On the other hand, when content of silver in the body is below the standard level (0.0001%), humans are susceptible to diseases. To increase the immunity of the body by harboring a large quantity of silver in the body, a great quantity of vegetables should be consumed. Silver has been reported to inactivate influenza viruses by a large number of positively charged silver ions (Ag⁺) released by its ionization, and such silver ions absorbed into the body kill various germs.

In addition to its activity against various germs, silver absorbs light of wavelengths harmful to the body, such as electricmagnetic waves or water vein waves. Therefore, when applied in vivo, silver can improve the health of human subjects.

Recently, microcapsules containing perfumes or pharmaceutical preparations have been described in Korean Pat. Publication Nos. 2001-39226 and 1993-23041. The Korean Pat. Publication No. 2001-39226 discloses a fiber-softening composition containing a perfume, in which microcapsules containing a perfume in the core and having an outer shell comprising a polymer are added to a fiber-softening composition at an amount of 0.5-5 wt%, thus allowing continuous emission of the perfume in the laundry after doing the laundry. Also, the Korean Pat. Publication No. 1993-23041 discloses a microcapsule containing an aromatic agent, a deodorizing agent and an antimicrobial agent in the inner core, and having the outer shell comprising a polymer, where the antimicrobial agent is one or more selected from the group consisting of quaternary ammonium, diphenylether, DDVP, bistributyltinoxide and imidazole.

The former microcapsule is effective in continuous emission of a perfume, but problematic in terms of having no antimicrobial activity. The latter microcapsule emits a perfume and has antimicrobial activity, but has disadvantages in that the antimicrobial activity is not long lasting and is effective only against a narrow spectrum of microorganisms.

### DISCLOSURE OF THE INVENTION

To solve the problems encountered in the prior art, the present invention aims to provide a functional microcapsule having a wide spectrum of antimicrobial activity which is maintained for a long period of time, and containing a sustained-release functional substance in the inner core thereof.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a structural view of a silver nanoparticle-containing functional microcapsule according to the present invention; and
Fig. 2 is a graph showing particle size of silver nanoparticles used in the present invention.

### BEST MODES FOR CARRYING OUT THE INVENTION

The present invention is directed to a method of preparing a silver nanoparticle-containing functional microcapsule, comprising the steps of mixing a functional substance selected from a perfume, a thermosensitive pigment, a photosensitive pigment, a thermal storage material and a pharmaceutical preparation with a surfactant in water, and emulsifying the mixture; adding an outer shell-forming substance selected from a melanin precondensate, gelatin, urethane and epoxy to the resulting emulsion to form a microcapsule containing the functional substance in a spherical inner core and having an outer shell surrounding the inner core; and treating the microcapsule before hardening of the outer shell with silver nanoparticles dispersed in a solution of a water-soluble styrene maleic anhydride polymer represented by Chemical Formula 1, below, to adhere the silver nanoparticles to the outer shell of the microcapsule:

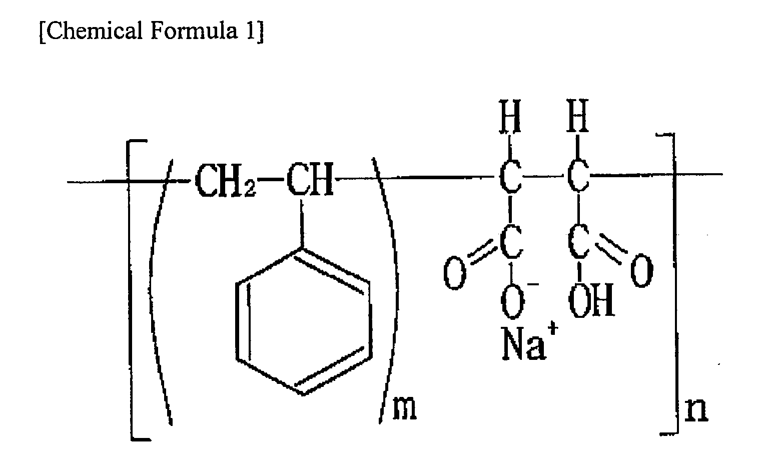

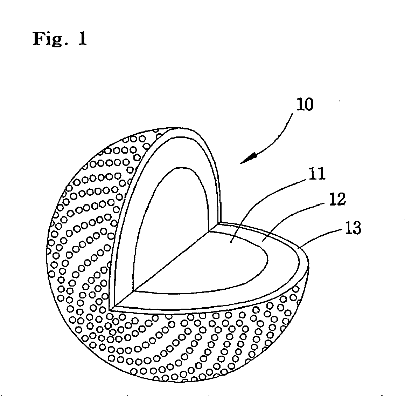

With reference to Fig. 1, a functional microcapsule 10 according to the present invention comprises an inner core 11 and an outer shell 13. The inner core 11 is formed in a spherical shape, and contains a functional substance selected from a perfume, a thermosensitive pigment, a photosensitive pigment, a thermal storage material and a pharmaceutical preparation. The outer shell 13 is composed of one selected from a melanin precondensate, gelatin, urethane and epoxy, and surrounds the inner core 11. The outer shell 13 contains silver nanoparticles.

Owing to its hydrophobic property, the functional substance is emulsified with a surfactant dissolved in water, in which the surfactant has both hydrophilic and hydrophobic moieties. The emulsified functional substance is mixed with a hydrophobic outer shell-forming substance to form an outer wall surrounding the functional substance, thereby generating the microcapsule 10 comprising the inner core 11 and the outer shell 13.

The functional substance placed in the inner core of the microcapsule is slowly released according to partial disruption of the outer shell by use of the microcapsule. Herein, the release rate of the functional substance may be controlled by physical strength of the outer shell-forming substance. That is, when the outer shell-forming substance has a high physical strength, the outer shell of the microcapsule is slowly disrupted, and thus the functional substance is continuously released in small amounts. When the outer shell-forming substance has a low physical strength, a large quantity of the functional substance is released in a short time.

To adhere silver nanoparticles to the outer shell 13 of the microcapsule, before hardening of the outer shell 13 consisting of the outer shell-forming substance, the microcapsule is added to the silver nanoparticle dispersion solution. When the outer shell 13 is hardened after the adherence of silver nanoparticles, silver nanoparticles adhere strongly to the outer shell, thus giving the microcapsule long-lasting antimicrobial activity. At this hardening step, a cross-linking agent and a hardening agent may be employed according to intended use of the microcapsule and physical properties of the outer shell-forming substance.

The silver nanoparticle dispersion solution is prepared by a process comprising the steps of preparing a surfactant solution by dissolving 3-6 wt% of water-soluble styrene maleic anhydride polymer in water; mixing the surfactant solution with a silver nitrate solution; and adding hydrazine to the mixture to reduce silver ions.

Silver ions themselves have no antimicrobial activity. Therefore, silver ions should be reduced to a metallic state. In the present invention, hydrazine used in the reduction step has high reducing power, as well as being easily decomposed in water.

After reduction of silver ions, despite its instability in water, the residual hydrazine compound should be removed because hydrazine is harmful to the body even at a trace amount. The residual hydrazine may be completely removed with sodium hyperchlorite.

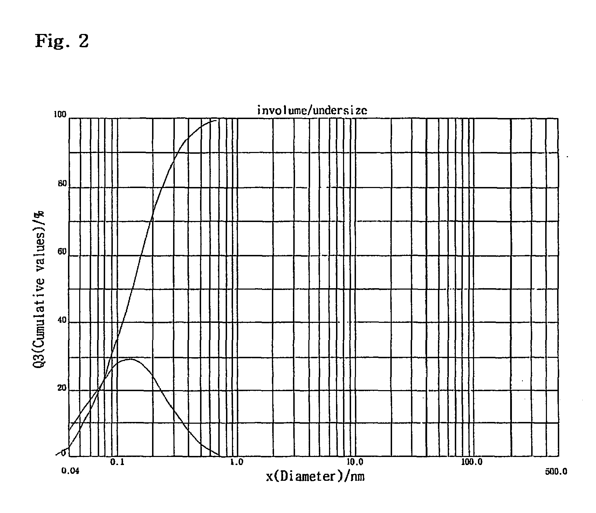

Silver nanoparticles prepared according to the above process are 10-300 nm in particle size (Fig. 2).

The present invention will be explained in more detail with reference to the following examples in conjunction with the accompanying drawings. However, the following examples are provided only to illustrate the present invention, and the present invention is not limited to them.

### EXAMPLE 1: Preparation of silver nanoparticle dispersion solution

A surfactant solution was prepared by dissolving 4 wt% of a water-soluble styrene maleic anhydride polymer represented by the above Chemical Formula 1 in 100 ml water. The surfactant solution was incubated at room temperature for 4 hrs, and filtered through a microfilter to remove granule aggregates generated during its preparation.

100g of the surfactant solution was well mixed with 150 g of water in a 1000 ml container with stirring at room temperature, and 100 ml of 0.1 M silver nitrate was added to the resulting surfactant solution. Thereafter, 200 ml of 0.1 M hydrazine was slowly dropped into the mixture with stirring. After incubation at room temperature for 24 hrs, 200 ml of 0.1 M sodium hyperchlorite was added to the mixture to remove the residual hydrazine.

After mixing at room temperature for 5 hrs, the final mixture was filtered through a 300-mesh stainless steel mesh to remove granule aggregates, thus yielding a silver nanoparticle dispersion solution.

Particle size of the silver nanoparticles was analyzed using a particle size analyzer. The result is given in Fig. 3. The silver nanoparticle was found to be 10-300 nm in particle size.

### EXAMPLE 2: Preparation of silver nanoparticle-containing microcapsules

Silver nanoparticle-containing microcapsules were prepared as follows. A lavender perfume was emulsified by mixing it with the surfactant solution prepared in Example 1 at a ratio of 1: 2. A melanin precondensate was added to the mixture, resulting in formation of microcapsules consisting of a spherical inner core and an outer shell surrounding the inner core. At a soft state before hardening of the outer shell, the silver nanoparticle dispersion solution prepared in Example 1 was added to the microcapsules at an amount of 15 wt%, followed by mixing. After silver nanoparticles were adhered to the outer shell of the microcapsule during mixing, the outer shell was hardened with a hardening agent, in this case, a diluted acetic acid solution.

### EXAMPLE 3: Antimicrobial test

The silver nanoparticle-containing microcapsules prepared in Example 2 were tested for antimicrobial activity. 0.5 wt% of the silver nanoparticle-containing microcapsules prepared in Example 2 was added to 1000 ml water. 50g of test fabric (cotton) was immersed in the microcapsule solution, followed by agitation for 10 min. Thereafter, the test fabric was washed fifteen times in a laundry test machine, and evaluated for antimicrobial activity. The results are given in Table 1, below.

**TABLE 1**

| | *Staphylococcus aureus* | *Klebsiella pneumoniae* |
|---|---|---|
| | (ATCC 6538P) | (ATCC 4352) |
| Cell density (cells/ml) | 1.0×10⁵ | 1.0×10⁵ |
| Proliferation rate (F) | 4.1 | 3.5 |
| Ma | 3.8 | 3.9 |
| Mb | 7.9 | 7.4 |
| Mc | 2.6 | 2.8 |
| Bacteriostatic activity (S) | 5.3 | 4.6 |
| Bacteriocidal activity (L) | 1.2 | 1.1 |
| Reduction rate of viable bacteria (%) | 99.9 | 99.9 |
| Non-ionic water-soluble polymer: polyoxyethylene sorbitan monoester | 0.05% | 0.05% |

### INDUSTRIAL APPLICABILITY

As described hereinbefore, the method of preparing a silver nanopaticle-containing functional microcapsule according to the present invention can provide a microcapsule having characteristic functions supplied by the functional substance slowly released from its inner core according to disruption of its outer shell, as well as excellent, broad-spectrum and long-lasting antimicrobial activity which is supplied by silver nanopaticles adhered to its outer shell.

## Claims

1. A method of preparing a silver nanoparticle-containing functional microcapsule, comprising the steps of:
mixing a functional substance selected from a perfume, a thermosensitive pigment, a photosensitive pigment, a thermal storage material and a pharmaceutical preparation with a surfactant in water, and emulsifying the mixture;
adding an outer shell-forming substance selected from a melanin precondensate, gelatin, urethane and epoxy to the resulting emulsion to form a microcapsule containing the functional substance in a spherical inner core and having an outer shell surrounding the inner core; and
treating the microcapsule before hardening of the outer shell with silver nanoparticles dispersed in 3-6 wt% of a water-soluble styrene maleic anhydride polymer represented by Chemical Formula 1, below, dissolved in water to adhere the silver nanoparticles to the outer shell of the microcapsule:

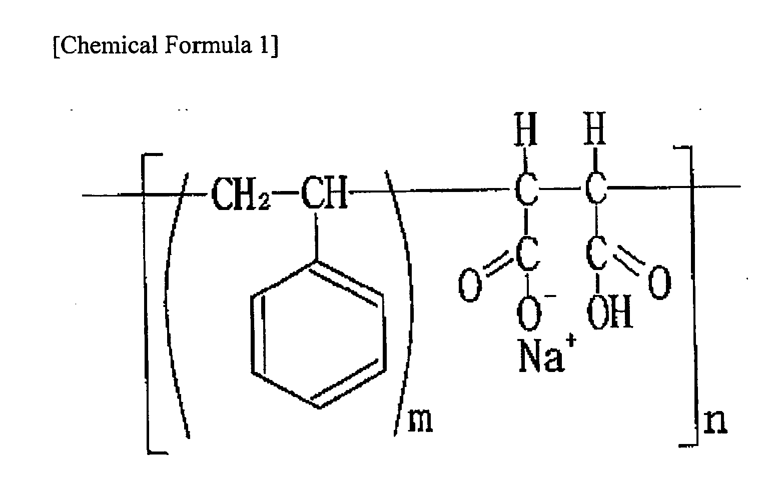

2. The method as set forth in claim 1, wherein the silver nanoparticle dispersion solution is prepared by adding silver nitrate and hydrazine to the aqueous solution of the styrene maleic anhydride represented by the Chemical Formula 1 of claim 1.

3. The method as set forth in claim 2, wherein the silver nanoparticle dispersion solution is prepared by further removing the residual hydrazine with sodium hyper chlorite.

4. The method as set forth in claim 1, wherein the silver nanoparticle dispersion solution is filtered through a stainless steel mesh.

## Patentansprüche

1. Verfahren zur Herstellung einer Silbernanoteilchen enthaltenden funktionellen Mikrokapsel, das die folgenden Schritte umfasst:
Mischen einer funktionellen Substanz, die aus einem Parfüm, einem wärmeempfindlichen Pigment, einem lichtempfindlichen Pigment, einem Wärmespeicherungsmaterial und einer pharmazeutischen Zubereitung ausgewählt wird, mit einem oberflächenaktiven Stoff in Wasser, und Emulgieren der Mischung;
Hinzufügen einer eine äußere Hülle bildenden Substanz, die aus einem Melaninvorkondensat, Gelatine, Urethan und Epoxidharz ausgewählt wird, zu der sich ergebenden Emulsion, um eine Mikrokapsel zu bilden, die die funktionelle Substanz in einem kugelförmigen inneren Kern enthält und eine äußere Hülle aufweist, die den inneren Kern umgibt; und
Behandeln der Mikrokapsel vor dem Härten der äußeren Hülle mit Silbernanoteilchen, die in 3-6 Massenanteilen eines wasserlöslichen Styrol-Maleinsäureanhydrid-Polymers, das von der unten aufgeführten chemischen Formel 1 repräsentiert wird, gelöst in Wasser dispergiert sind, um die Silbernanoteilchen an der äußeren Hülle der Mikrokapsel zum Anhaften zu bringen:

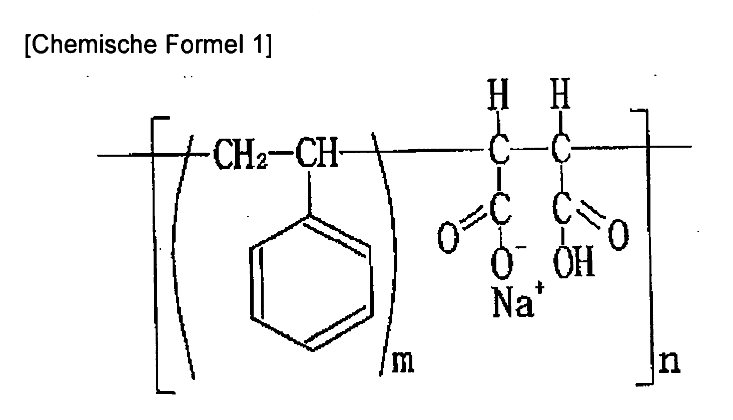

2. Verfahren nach Anspruch 1, wobei die Silbernanoteilchen-Dispersionslösung hergestellt wird, indem Silbernitrat und Hydrazin zu der wässrigen Lösung des Styrol-Maleinsäureanhydrids hinzugefügt wird, das von der chemischen Formel 1 von Anspruch 1 repräsentiert wird.

3. Verfahren nach Anspruch 2, wobei die Silbernanoteilchen-Dispersionslösung hergestellt wird, indem ferner das restliche Hydrazin mit Natriumhyperchlorit entfernt wird.

4. Verfahren nach Anspruch 1, wobei die Silbernanoteilchen-Dispersionslösung durch ein rostfreies Stahlnetz gefiltert wird.

## Revendications

1. Procédé pour préparer une microcapsule fonctionnelle contenant des nanoparticules d'argent, comprenant les étapes suivantes :
on mélange une substance fonctionnelle choisie parmi un parfum, un pigment thermosensible, un pigment photosensible, un matériau de stockage thermique, et une préparation pharmaceutique, avec un agent tensioactif dans de l'eau, et on émulsifie le mélange;
on ajoute une substance destinée à former une coque extérieure, choisie parmi un précondensat de mélanine, de la gélatine, de l'uréthane et de l'époxy, à l'émulsion résultante pour former une microcapsule contenant la substance fonctionnelle dans un noyau intérieur sphérique et ayant une coque extérieure entourant le noyau intérieur ; et
on traite la microcapsule avant le durcissement de la coque extérieure avec des nanoparticules d'argent dispersées dans un polymère anhydride styrène-maléique soluble dans l'eau représenté par la formule chimique 1 ci-dessous, dissous dans de l'eau pour faire adhérer les nanoparticules d'argent à la coque extérieure de la microcapsule :

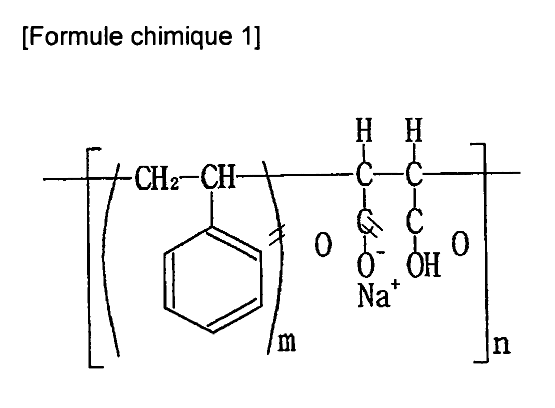

2. Procédé selon la revendication 1, dans lequel la solution de dispersion des nanoparticules d'argent est préparée en ajoutant du nitrate d'argent et de l'hydrazine à la solution aqueuse de l'anhydride styrène maléique représenté par la formule chimique 1 de la revendication 1.

3. Procédé selon la revendication 2, dans lequel la solution de dispersion des nanoparticules d'argent est préparée en supprimant en outre l'hydrazine résiduelle avec de l'hyperchlorite de sodium.

4. Procédé selon la revendication 1, dans lequel la solution de dispersion des nanoparticules d'argent est filtrée à travers un grillage en acier inoxydable.
